# EUROPÄISCHE PATENTSCHRIFT

(11) **EP 0 770 450 B1**
(45) Veröffentlichungstag und Bekanntmachung des Hinweises auf die Patenterteilung: **06.03.2002**
(21) Anmeldenummer: 96115443.2
(22) Anmeldetag: 26.09.1996
(51) Int. Cl.: B23K 35/363, B23K 1/20

(54) **Flussmittelbeschichtete Metallbauteile**
Flux coated metal member
Pièce métallique revêtre de flux

(30) Priorität: 06.10.1995 DE 19537216
(43) Veröffentlichungstag der Anmeldung: 02.05.1997
(73) Patentinhaber: Solvay Fluor und Derivate GmbH, 30173 Hannover (DE)
(72) Erfinder: Belt, Heinz-Joachim, 30938 Burgwedel (DE); Sander, Rüdiger, 31319 Sehnde (DE); Rudolph, Werner, 30599 Hannover (DE)
(74) Vertreter: Lauer, Dieter, Dr.

(56) Entgegenhaltungen:
- EP-A- 0 552 567
- DE-A- 4 339 498
- US-A- 4 579 605
- US-A- 4 723 597
- US-A- 4 781 320

## Beschreibung

Die Erfindung bezieht sich auf neuartige, mit Flußmittel beschichtete Metallbauteile, ihre Herstellung und ihre Verwendung zur Herstellung gelöteter Metallkonstruktionen.

Eine Methode zur Herstellung von Metallkonstruktionen aus miteinander verbundenen Metallbauteilen stellt das Ofenlöten dar. Dabei werden die Metallbauteile bei einer Temperatur oberhalb von beispielsweise 500 °C mit Hilfe eines geschmolzenen Zusatzmetalls (Lot) verbunden. Beim Löten stellen Oxide und andere störende Deckschichten auf der Metalloberfläche ein Problem dar: die Oberfläche muß metallisch rein sein, damit eine einwandfreie Lötverbindung zustandekommt. Hierzu verwendet man Flußmittel, welche meist aufgepinselt, aufgesprüht oder als Lotummantelung auf das Bauteil aufgetragen werden.

Flußmittel, auf Basis von Kaliumsalzen von Fluoraluminaten sind besonders gut geeignet, z. B. für das Hartlöten von Leichtmetallwerkstoffen wie Aluminium, da sie nicht korrosiv und nicht hygroskopisch sind. Sehr gut geeignet sind beispielsweise Gemische von Kaliumtetrafluoraluminat und Trikaliumhexafluoraluminat oder auch Gemische von Kaliumtetrafluoraluminat und Dikaliumpentafluoraluminat; die letztere Verbindung kann gegebenenfalls als Hydrat vorliegen.

Die US 4,723,597 beschreibt die Verwendung von pigmenthaltigen Gemischen aus Kaliumhexafluoraluminat und Kaliumtetrafluoraluminat als Flußmittel für Leichtmetallwerkstoffe.

Zur Herstellung der Metallkonstruktion werden die bereits mit Lot beschichteten Metallbauteile zusammengesteckt, in eine Aufschlämmung eines Flußmittels eingetaucht und unter Erhitzen verlötet. Das Flußmittel schmilzt und reinigt die Oberfläche, das Lot bewirkt das Zustandekommen der Lötverbindung. Nachteil der hier beschriebenen Methode ist es, daß nicht nur diejenigen Bereiche der Metallbauteile beschichtet werden, die verlötet werden sollen, sondern auch die anderen Oberflächenbereiche. Dadurch kann es zur Beeinträchtigung der Funktion der Metallkonstruktion kommen. Beispielsweise kann der Wärmeaustausch von derartig oberflächenbeschichteten Lamellen in Kühlern verringert sein. Eine andere Methode sieht vor, daß man nur diejenigen Bereiche der Metallbauteile mit Lot bzw. Flußmittel beschichtet, welche durch Kontakt miteinander verlötet werden sollen. Dazu muß das Flußmittel haftfest aufgebracht werden; hierzu wird es mittels eines organischen oder anderen geeigneten Bindemittels auf der Metalloberfläche aufgeklebt. Beim Erhitzen während des Verlötens brennt das meist organische Bindemittel aus und bildet dabei gesundheitsschädliche Abgase in Form von Zersetzungsprodukten.

Aufgabe der vorliegenden Erfindung ist es, Metallbauteile anzugeben, die beim Verlöten die Nachteile des Standes der Technik nicht aufweisen. Diese Aufgabe wird durch die Metallbauteile gemäß der Patentansprüche gelöst.

Das erfindungsgemäße Metallbauteil zeichnet sich dadurch aus, daß es eine binderfrei-haftende, gesinterte Flußmittelbeschichtung aufweist. Das Metallbauteil kann prinzipiell beliebige Flußmittel aufweisen, die durch Sintern haftend aufgebracht sind und die beim Sintern ihre Flußmitteleigenschaften nicht in unerwünschtem Maß einbüßen. Anorganische Flußmittel, insbesondere auf Basis eines oder mehrerer Kaliumsalze von Fluoraluminaten, sind sehr gut geeignet. Dabei kann es sich um Kaliumsalze von Tetra-, Penta-, Hexafluoraluminaten, deren Hydraten oder Gemischen einzelner oder mehrerer der genannten Fluoraluminate handeln.

Bevorzugt sind jene Metallbauteile, deren Flußmittelbeschichtung auf Kaliumtetrafluoraluminat und/oder Dikaliumpentafluoraluminat oder einem Hydrat davon basieren. Ganz besonders bevorzugt sind Metallbauteile, deren Flußmittel auf einer Mischung von Kaliumtetrafluoraluminat und dehydratisiertem Dikaliumpentafluoraluminat basieren; insbesondere bevorzugt basiert das Flußmittel auf einer Mischung von Kaliumtetrafluoraluminat und irreversibel dehydratisiertem Dikaliumpentafluoraluminat. Ein derartig bevorzugtes Flußmittel basierend auf irreversibel dehydratisiertem Dikaliumpentafluoraluminat wird in der deutschen Offenlegungsschrift DE-OS 19519515 offenbart. Um ein solches Flußmittel zu erzeugen, erhitzt man hydratisiertes oder reversibel dehydratisiertes Dikaliumpentafluoraluminat während einer ausreichenden Zeitdauer bei einer solchen Temperatur, daß das Hydrat oder das reversibel dehydratisierte Ausgangsmaterial mindestens teilweise sich zum irreversibel dehydratisierten Produkt umwandelt. Zweckmäßig liegt diese Temperatur oberhalb von 265 °C, insbesondere bei oder oberhalb von 300 °C. Das irreversibel dehydratisierte Dikaliumpentafluoraluminat kann dann üblichen Flußmitteln auf Basis von Kaliumsalzen von komplexen Fluoraluminaten beigemischt werden. Alternativ kann man bereits von Gemischen ausgehen, die das Hydrat oder reversibel dehydratisiertes Dikaliumpentafluoraluminat enthalten, und das Gemisch dann temperaturbehandeln. Beispielsweise kann man gemäß Willenberg, US-A 4,428,920, oder Kawase, US-A 4,579,605 ein Gemisch von Kaliumtetrafluoraluminat und hydratisiertem Dikaliumpentafluoraluminat erzeugen und dann dieses Gemisch bei einer Temperatur von vorzugsweise 265 °C oder höher irreversibel dehydratisieren. Man erhält dann ein hervorragendes Lötmittel, welches Kaliumtetrafluoraluminat sowie irreversibel dehydratisiertes Dikaliumpentafluoraluminat enthält. Ein solches bevorzugtes Flußmittel haftet einerseits sehr gut auf den Metallbauteilen, andererseits bewirkt es ein vorzügliches Fließen des Lotes auf der Oberfläche des Metallbauteils.

Ein gut geeignetes Flußmittel auf Basis von Kaliumsalzen von Fluoraluminaten enthält jeweils 0 bis 100 Gew.-% Kaliumtetrafluoraluminat, Dikaliumpentafluoraluminat in Form des Hydrats bzw. als reversibel oder irreversibel dehydratisiertes Produkt, und/oder Trikaliumhexafluoraluminat. Außerdem können Lotmetalle oder andere Hilfsstoffe, z.B. die Lötstelle modifizierende Metalle wie in der WO 92/12821 beschrieben, enthalten sein.

Das bevorzugte Flußmittel enthält (vor der Sinterung) 60 bis 90 Gew.-% Kaliumtetrafluoraluminat, 10 bis 40 Gew.-% irreversibel dehydratisiertes Dikaliumpentafluoraluminat, reversibel dehydratisiertes Dikaliumpentafluoraluminat und/oder das Monohydrat von Dikaliumpentafluoraluminat und 0 bis 10 Gew.-% Trikaliumhexafluoraluminat. Außerdem kann noch die gewünschte Menge an Hilfsstoffen wie Lotmetall enthalten sein (z. B. bis zu 5 Gew.-% oder mehr). Das Dikaliumpentafluoraluminat ist bevorzugt irreversibel dehydratisiert enthalten.

Das Lotmetall ist vorteilhaft entweder in der Flußmittelbeschichtung enthalten oder als Lotbeschichtung zwischen der Flußmittelbeschichtung und dem Metallbauteil angeordnet.

Ein gut brauchbares Flußmittel, welches das Lotmetall und gegebenenfalls weitere modifizierende Metalle als Hilfsstoffe enthält, wird in der WO 92/12821 beschrieben. Ein besonders gut geeignetes Flußmittel mit Lotmetallgehalt wird in der schon erwähnten deutschen Patentanmeldung DE-OS 19519 515 beschrieben.

Gemäß der Lehre der WO 92/12821 kann man dem Flußmittel ein Metall beimischen, welches vorteilhaft feinpulverig vorliegt, beispielsweise in Form von Partikeln einer Größe unterhalb von 1000 µm. Sehr gut geeignet als Lotmetall ist Silicium, gut geeignet sind auch Kupfer und Germanium. Beispielsweise kann man gemäß der Lehre jener internationalen Anmeldung ein Flußmittel einsetzen, welches je 100 Gewichtsteile der Fluoraluminium-Verbindungen 10 bis 500 Gewichtsteile an feinpulvrigem Lötmetall enthält. Zusätzlich kann man dem Flußmittel auch noch weitere Metalle als Hilfsstoffe feinpulverig beimischen, welche die Oberflächeneigenschaften der gelöteten Teile bzw. des sich bildenden Eutektikums modifizieren. So kann man feinpulveriges Eisen, Mangan, Nickel, Zink, Wismut, Strontium, Chrom, Antimon oder Vanadium beimischen.

Die Lehre der WO 92/12821 wird in der deutschen Patentanmeldung DE-OS 19519515 dahingehend modifiziert, daß das Lotmetall in dem speziellen Flux enthalten ist, welcher eine gleichmäßige Beschichtung erlaubt, sehr gut nach dem Sintern auf dem Metallwerkstück haftet und zu einem hervorragenden Fließen des Lotes führt.

Selbstverständlich kann man das Metallbauteil vollständig mit dem, gegebenenfalls Lotmetall oder andere Hilfsstoffe enthaltenden, Flußmittel beschichten. Nach dem Sintern haftet das Flußmittel wie gesagt sehr gut auf dem Metallbauteil, so daß das Metallbauteil mit dem gesinterten Flußmittel sehr gut handhabbar ist.

Besonders bevorzugt ist es, einen Teil oder all jene Oberflächenbereiche des Metallbauteils nicht mit dem Flußmittel zu beschichten, welche nicht zu den Lötstellen gehören, die nach dem Verlöten zur festen Verbindung der verschiedenen Metallbauteile führen. Hierzu trägt man das Flußmittel gezielt auf die entsprechenden Lötstellen auf, beispielsweise durch Aufsprühen oder Aufpinseln, so daß die anderen, für den eigentlichen Lötvorgang nicht notwendigen Bereiche des Metallbauteils nicht mit dem Flußmittel bzw. Mischungen davon beschichtet werden.

Im folgenden wird die Herstellung der Metallbauteile beschrieben, welche mit dem gesinterten Flußmittel beschichtet sind. Zunächst kontaktiert man das jeweilige Metallbauteil mit dem binderfreien Flußmittel. Hierzu kann man "trockene" Methoden einsetzen. So kann man das Flußmittel als Pulver elektrostatisch aufbringen. Zweckmäßig verwendet man wäßrige Aufschlämmungen. Vorteilhaft enthält die Aufschlämmung 3 bis 60 Gew.-% des Flußmittels sowie Wasser und etwaige Verunreinigungen, die den Rest auf 100 Gew-% bilden. Das Kontaktieren kann man beispielsweise durch teilweises oder vollständiges Eintauchen in die Aufschlämmung bewirken oder durch Aufpinseln oder Aufsprühen der Aufschlämmung auf das gesamte Metallbauteil oder bestimmte Bereiche davon. Das Metallbauteil wird dann erhitzt, so daß sich auf dem Metallbauteil eine gesinterte, haftende, binderfreie Flußmittelbeschichtung bildet, wobei man das Schmelzen des Flußmittels vermeidet, indem man unterhalb der Schmelztemperatur des Flußmittels bleibt. Gute Ergebnisse werden erzielt, wenn man in einem Temperaturbereich sintert, welcher bei 70 °C unterhalb des Schmelzpunktes des Flußmittels oder höher liegt, z.B. bis hin zu 3° C unterhalb des Schmelzpunktes. Die für die Sinterung geeignete Zeitdauer hängt von der Temperatur ab, bei welcher gesintert wird, sowie auch vom jeweils verwendeten Flußmittel. Die optimale Zeitdauer kann man durch einfache Handversuche leicht ermitteln. Üblicherweise liegt die für die Sinterung notwendige Zeitdauer in einem Bereich von 10 bis 120 sec.

Die erfindungsgemäßen Metallbauteile, beispielsweise Rahmen, Rohre und Lamellen von Kühlern, eignen sich hervorragend zur Herstellung gelöteter Metallkonstruktionen. Dazu werden die gesinterten Metallbauteile zusammengefügt und erhitzt, so daß das Flußmittel und das verwendete Lot schmelzen und zur Verlötung der Bauteile führen. Das Verlöten wird zweckmäßig in einem Lötofen durchgeführt, wobei man unter Luftatmosphäre oder Inertgasatmosphäre wie Stickstoff arbeiten kann. Beispielsweise kann man Kühler und Wärmetauscher durch Verlöten der Bauteile herstellen.

Metallkonstruktionen, die unter Verlöten der erfindungsgemäßen Metallbauteile erhältlich sind, insbesondere unter Verwendung von Metallbauteilen, die nur an den Lötstellen eine gesinterte Beschichtung des Lötflußmittels aufweisen, sind ebenfalls Gegenstand der Erfindung.

Die erfindungsgemäßen Metallbauteile weisen den Vorteil auf, daß sie eine Flußmittelschicht aufweisen, die haftfest aufgebracht ist, ohne daß hierfür ein Bindemittel benötigt wird. Besonders vorteilhaft sind jene erfindungsgemäßen Metallbauteile, die nur oder im wesentlichen nur an den Lötstellen beschichtet sind.

Die folgenden Beispiele sollen die Erfindung weiter erläutern, ohne sie in ihrem Umfang einzuschränken.

### Beispiel 1:

### Herstellung von haftfest beschichteten Aluminiumplättchen

Aluminiumplättchen der Größe 25 x 25 x 0,5 mm wurden in eine Flußmittelsuspension (15 Gew.-% Kaliumfluoroaluminat-Flux/ 85 Gew.-% Wasser/Netzmittel) getaucht und auf diese Weise mit der Flußmittelsuspension benetzt. Das Wasser wurde bei ca. 150 °C abgedampft, so daß eine geschlossene weiße Flußmittelschicht auf den Plättchen verblieb. Ohne weitere Behandlung war diese Beschichtung leicht abzuwischen; es handelte sich also um eine locker anhaftende Pulverschicht. Die beschichteten Aluminiumplättchen wurden dann bei einer Temperatur von ca. 520 °C für ca. 30 sec getempert. Dabei wurde die an sich locker anhaftende Pulverschicht durch Sinterung der Flußmittelschicht in eine festhaftende, gegen mechanische Beanspruchung sehr wiederstandsfähige Flußmittelschicht umgewandelt.

### Beispiel 2:

### Beschichtung mit Lotmetall und Flußmittel

Beispiel 1 wurde wiederholt. Diesmal wurde eine Suspension eingesetzt, welche 15 Gew.-% Kaliumfluoraluminat-Flußmittel, 8 Gew.-% Siliciumpulver (als Lotmetall) sowie 77 Gew.-% Wasser mit etwas Netzmittel enthielt. Die Aluminiumplättchen wurden wie oben beschrieben mit der Suspension behandelt. Es wurden Aluminiumplättchen erhalten, welche mit einer mechanisch festhaftenden, Siliciumpulver enthaltenden Flußmittelschicht beschichtet waren.

### Beispiel 3:

### Anwendung der beschichteten Aluminiumplättchen zur Herstellung von Metallkonstruktionen

**3.1.** Anwendung von Aluminiumplättchen aus Beispiel 1:
   Ein Aluminiumplättchen aus Beispiel 1 wurde so geknickt, daß es den Buchstaben "V" bildete. Das geknickte Plättchen wurde auf ein nicht geknicktes Aluminiumplättchen aus Beispiel 1 derart aufgelegt, daß die Knicklinie des geknickten Plättchens senkrecht zur Oberfläche des nicht geknickten Plättchens angeordnet war. In die unmittelbare Nähe der Kontaktfläche zwischen den beiden Aluminiumplättchen wurde ein Lotmetall-Kügelchen gelegt. Die gebildete Konstruktion wurde in einen Lötofen eingebracht und auf eine Temperatur knapp oberhalb des Schmelzpunkt des Lotes, welcher bei etwa 572 °C lag, gebracht. Durch den durchsichtigen Lötofen konnte beobachtet werden, wie zunächst das gesinterte Flußmittel schmolz und anschließend das Lotmetall. Nach dem Abkühlen konnte festgestellt werden, daß das Flußmittel dem Lotmetall derart gute Fließeigenschaften vermittelt hatte, daß die gesamte Kontaktfläche der beiden Aluminiumplättchen miteinander verlötet war.
**3.2.** Anwendung von Aluminiumplättchen aus Beispiel 2
   Beispiel 3.1 wurde wiederholt, die Beigabe eines Lotmetalls entfiel jedoch. Auch hier entstand eine Metallkonstruktion, die sehr gut miteinander verlötet war.
   Die Beispiele zeigen, daß durch Sinterung der Flußmittelschicht eine festhaftende, gegen mechanische Beanspruchung sehr wiederstandsfähige Flußmittelschicht erzeugt werden kann, welche unerwarteter Weise ihre lötfördernden Eigenschaften beibehält.

## Patentansprüche

1. Metallbauteil mit einer binderfrei haftenden, unterhalb der Schmelztemperatur des Flußmittels gesinterten Flußmittelbeschichtung, wobei das Metallbauteil noch nicht mit anderen Metallbauteilen verlötet ist.

2. Metallbauteil nach Anspruch 1, **dadurch gekennzeichnet, daß** das Flußmittel auf Kaliumsalze von Fluoraluminaten, vorzugsweise auf Kaliumtetrafluoraluminat und/oder Dikaliumpentafluoraluminat oder einem Hydrat davon basiert.

3. Metallbauteil nach Anspruch 1 oder 2, **dadurch gekennzeichnet, daß** das Flußmittel auf einer Mischung von Kaliumtetrafluoraluminat und dehydratisiertem Dikaliumpentafluoraluminat, vorzugsweise auf einer Mischung von Kaliumtetrafluoraluminat und irreversibel dehydratisiertem Dikaliumpentafluoraluminat basiert.

4. Metallbauteil nach einem der vorhergehenden Ansprüche, **dadurch gekennzeichnet, daß** das Metallbauteil zusätzlich Lotmetall und/oder andere Hilfsstoffe aufgebracht enthält.

5. Metallbauteil nach Anspruch 4, **dadurch gekennzeichnet, daß** das Lotmetall in der Flußmittelbeschichtung enthalten ist oder als Lotbeschichtung zwischen der Flußmittelbeschichtung und dem Metallbauteil angeordnet ist.

6. Metallbauteil nach einem der vorhergehenden Ansprüche, **dadurch gekennzeichnet, daß** die Flußmittelbeschichtung im wesentlichen nur in durch Verlöten mit anderen Bauteilen zu verbindenden Bereichen des Metallbauteils vorliegt.

7. Metallbauteil nach einem der vorhergehenden Ansprüche, **dadurch gekennzeichnet, daß** die Flußmittelbeschichtung 60 bis 90 Gew.-% Kaliumtetrafluoraluminat, 10 bis 40 Gew.-% Dikaliumpentafluoraluminat und/oder Dikaliumpentafluoraluminat-Hydrat, 0 bis 5 Gew.-% Trikaliumhexafluoraluminat sowie gegebenenfalls Hilfsstoffe, insbesondere Lotmetall als Hilfsstoff, enthält.

8. Verfahren zum Herstellen eines Metallbauteils nach einem der Ansprüche 1 bis 7, **dadurch gekennzeichnet, daß** man das Metallbauteil mit dem Flußmittel kontaktiert und dann bei solcher Temperatur während einer solchen Zeitdauer erhitzt, daß sich auf dem Metallbauteil unter Vermeiden des Schmelzens eine gesinterte, haftende binderfreie Flußmittelbeschichtung bildet.

9. Verfahren nach Anspruch 8, **dadurch gekennzeichnet, daß** man bei einer Temperatur sintert, die bei 70 °C unterhalb des Schmelzpunktes des Flußmittels oder höher liegt.

10. Verwendung von Metallbauteilen der Ansprüche 1 bis 7 zur Herstellung gelöteter Metallkonstruktionen.

## Claims

1. A metal component, comprising a flux coating which adheres without binder and which has been sintered below the melting temperature of the flux, the metal component not yet having been soldered to other metal components.

2. A metal component according to Claim 1, **characterised in that** the flux is based on potassium salts of fluoro-aluminates, preferably on potassium tetrafluoroaluminate and/or dipotassium pentafluoroaluminate or a hydrate thereof.

3. A metal component according to Claim 1 or 2, **characterised in that** the flux is based on a mixture of potassium tetrafluoroaluminate and dehydrated dipotassium pentafluoroaluminate, preferably on a mixture of potassium tetrafluoroaluminate and irreversibly dehydrated dipotassium pentafluoroaluminate.

4. A metal component according to one of the preceding claims, **characterised in that** the metal component additionally contains an application of solder metal and/or other auxiliaries.

5. A metal component according to Claim 4, **characterised in that** the solder metal is contained in the flux coating or is arranged as a solder coating between the flux coating and the metal component.

6. A metal component according to one of the preceding claims, **characterised in that** the flux coating is present substantially only in regions of the metal component which are to be joined to other components by soldering.

7. A metal component according to one of the preceding claims, **characterised in that** the flux coating contains 60 to 90% by weight potassium tetrafluoroaluminate, 10 to 40% by weight dipotassium pentafluoroaluminate and/or dipotassium pentafluoroaluminate hydrate, 0 to 5% by weight tripotassium hexafluoroaluminate and also optionally auxiliaries, in particular solder metal as auxiliary.

8. A method for producing a metal component according to one of Claims 1 to 7, **characterised in that** the metal component is contacted with the flux and then is heated at such a temperature and for such a time that a sintered, adhering, binder-free flux coating is formed on the metal component, avoiding melting.

9. A method according to Claim 8, **characterised in that** sintering is effected at a temperature which is 70°C below the melting point of the flux or higher.

10. The use of metal components of Claims 1 to 7 for the production of soldered metal structures.

## Revendications

1. Composant métallique comportant un revêtement formé d'un flux, adhérant sans liant et fritté au-dessous de la température de fusion du flux, le composant métallique n'étant pas encore lié par brasage à d'autres composants métalliques.

2. Composant métallique selon la revendication 1, **caractérisé en ce que** le flux se fonde sur des sels de potassium de fluoroaluminates, de préférence sur du tétrafluoroaluminate de potassium et/ou du pentafluoroaluminate dipotassique ou un hydrate de ces substances.

3. Composant métallique selon la revendication 1 ou 2, **caractérisé en ce que** le flux se fonde sur un mélange de tétrafluoroaluminate de potassium et de pentafluoroaluminate dipotassique déshydraté, de préférence sur un mélange de tétrafluoroaluminate de potassium et de pentafluoroaluminate dipotassique, déshydraté de façon irréversible.

4. Composant métallique selon l'une des revendications précédentes, **caractérisé en ce que** le composant métallique contient en plus, en application, de la brasure et/ou d'autres substances auxiliaires.

5. Composant métallique selon la revendication 4, **caractérisé en ce que** la brasure est contenue dans le revêtement formé de flux ou est disposée, sous forme d'un dépôt de brasure, entre le revêtement formé de flux et le composant métallique.

6. Composant métallique selon l'une des revendications précédentes, **caractérisé en ce que** le revêtement formé de flux n'est essentiellement présent que dans des zones du composant métallique, qui doivent être reliées par brasage à d'autres composants.

7. Composant métallique selon l'une des revendications précédentes, **caractérisé en ce que** le revêtement formé de flux contient 60 à 90 % en poids de tétrafluoroaluminate de potassium, 10 à 40 % en poids de pentafluoroaluminate dipotassique et/ou de pentafluoroaluminate dipotassique hydraté, 0 à 5 % en poids d'hexafluoroaluminate tripotassique, ainsi que, éventuellement, des substances auxiliaires, notamment de la brasure en tant que substance auxiliaire.

8. Procédé pour fabriquer un composant métallique selon l'une des revendications 1 à 7, **caractérisé en ce qu'**on place le composant métallique en contact avec le flux et on le chauffe ensuite à une température telle et pendant une durée telle, qu'un revêtement en flux, fritté, adhérent et exempt de liant, se forme sur le composant métallique, tout en évitant la fusion.

9. Procédé selon la revendication 8, **caractérisé en ce qu'**on réalise le frittage à une température qui se situe à 70°C au-dessous du point de fusion du flux ou à une température plus élevée.

10. Utilisation de composants métalliques selon les revendications 1 à 7, pour fabriquer des structures métalliques brasées.
